# EUROPEAN PATENT APPLICATION

(11) **EP 4 513 965 A1**
(43) Date of publication of application: **26.02.2025**
(21) Application number: 22937996.1
(22) Date of filing: 22.04.2022
(51) Int. Cl.: H04W 36/28

(54) **METHODS AND APPARATUSES FOR RECORDING PSCELL ADDITION OR CHANGE SUCCESS REPORT**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/088637
(87) International publication number: WO 2023/201760

(57) **Abstract**

The present disclosure belongs to the technical field of communications. Provided are methods and apparatuses for recording a PScell addition or change success report, and devices and storage media. A method comprises: a terminal device receiving a configuration message sent by a network-side device, wherein the configuration message comprises a trigger condition configuration therein; and according to the trigger condition configuration, recording a PScell addition or change success report. Thus, in the present disclosure, with regard to the case that "the recording of a PScell addition or change success report is not currently supported", a processing method is provided, so as to provide an additional acknowledgement opportunity, thereby increasing the PScell addition or change success rate.

## Description

### TECHNICAL FIELD

The disclosure relates to the field of communication technologies, more particularly to a method, an apparatus and a device for recording a report of successful primary secondary cell (PScell) addition or change, and a storage medium.

### BACKGROUND

In a communication system, a network device may configure a trigger condition for PSCell addition or change to a terminal, and the terminal may add or change a PSCell when meeting a condition. In addition, in case the PSCell addition or change fails in the terminal, such as a failure of secondary cell group (SCG) addition or change, or a failure of SCG configuration, the terminal may send an SCG failure message to the network device.

However, recording a report of successful PSCell addition or change is not supported temporarily after the PSCell addition or change is performed. Therefore, it is caused that, in case the PSCell addition or change fails, a subsequent transmission service may be affected, such as dropped calls. Thus, there is an urgent need for a method of "recording the report of successful PScell addition or change" to provide an additional confirmation opportunity and to improve a success rate of the PSCell addition or change.

### SUMMARY

The disclosure provides a method, an apparatus and a device for recording a report of successful primary secondary cell (PScell) addition or change (PAC), and a storage medium, to provide an additional confirmation opportunity and to ensure a success rate of the PAC.

A first aspect of embodiments of the disclosure provides a method for recording a report of successful PAC, performed by a terminal, including: receiving a configuration message sent by a network device, in which the configuration message includes a trigger condition configuration; and recording the report of successful PAC based on the trigger condition configuration.

Alternatively, in an embodiment of the disclosure, recording the report of successful PAC based on the trigger condition configuration includes:
obtaining an elapsed time of a timer associated with the terminal; and recording the report of successful PAC based on the elapsed time of the timer and the trigger condition configuration.

Alternatively, in an embodiment of the disclosure, the timer associated is a first timer of a current PScell, the trigger condition configuration includes a first threshold, and recording the report of successful PAC based on the elapsed time of the timer and the trigger condition configuration includes: recording the report of successful PAC in case a ratio of an elapsed time of the first timer to a first configuration value of a configured PScell is greater than the first threshold.

Alternatively, in an embodiment of the disclosure, the first configuration value of the configured PScell is included in the trigger condition configuration.

Alternatively, in an embodiment of the disclosure, the configuration message including the first configuration value of the configured PScell is a radio resource control (RRC) reconfiguration message last applied, and a secondary cell group in the RRC reconfiguration message includes a reconfigurationWithSync.

Alternatively, in an embodiment of the disclosure, the trigger condition configuration is received before a last PAC.

Alternatively, in an embodiment of the disclosure, the timer associated is a second timer of a current PScell, the trigger condition configuration includes a second threshold, and recording the report of successful PAC based on the elapsed time of the timer and the trigger condition configuration includes:
recording the report of successful PAC in case a ratio of an elapsed time of the second timer to a second configuration value of a configured PScell is greater than the second threshold.

Alternatively, in an embodiment of the disclosure, the second configuration value of the configured PScell is included in the trigger condition configuration.

Alternatively, in an embodiment of the disclosure, the second configuration value of the configured PScell is configured when the terminal is still connected to a source PScell before the terminal executes a last PAC.

Alternatively, in an embodiment of the disclosure, the trigger condition configuration is received before a last PAC.

Alternatively, in an embodiment of the disclosure, the timer associated is a third timer associated with a measurement identity of a target PScell, the trigger condition configuration includes a third threshold, and recording the report of successful PAC based on the elapsed time of the timer and the trigger condition configuration includes: recording the report of successful PAC in case the third timer is still running when the terminal initiates the PAC, and a ratio of an elapsed time of the third timer to a third configuration value of a configured PScell is greater than the third threshold.

Alternatively, in an embodiment of the disclosure, the third configuration value of the configured PScell is included in the trigger condition configuration.

Alternatively, in an embodiment of the disclosure, the third configuration value of the configured PScell is configured when the terminal is still connected to a source PScell before the terminal executes a last PAC.

Alternatively, in an embodiment of the disclosure, the trigger condition configuration is received before a last PAC.

Alternatively, in an embodiment of the disclosure, the configuration message is a radio resource control (RRC) reconfiguration message or an RRC connection reconfiguration message.

Alternatively, in an embodiment of the disclosure, recording the report of successful PAC includes: recording the report of successful PAC in a storage variable.

Alternatively, in an embodiment of the disclosure, the trigger condition configuration is deleted before a last PAC is executed.

Another aspect of embodiments of the disclosure provides a method for recording a report of successful PAC, performed by a network device, including: sending a configuration message to a terminal, in which the configuration message includes a trigger condition configuration, and the trigger condition configuration indicates the terminal to record the report of successful PAC after the terminal meets the trigger condition configuration.

Alternatively, in an embodiment of the disclosure, the trigger condition configuration includes a first threshold corresponding to a first timer of a current PScell or a second threshold corresponding to a second timer of a current PScell.

Alternatively, in an embodiment of the disclosure, the trigger condition configuration further includes a first configuration value of a configured PScell or a second configuration value of a configured PScell.

Alternatively, in an embodiment of the disclosure, the trigger condition configuration includes a third threshold corresponding to a third timer associated with a measurement identity of a target PScell.

Alternatively, in an embodiment of the disclosure, the trigger condition configuration includes comprises a third configuration value of a configured PScell.

Alternatively, in an embodiment of the disclosure, the configuration message is a radio resource control (RRC) reconfiguration message or an RRC connection reconfiguration message.

Another aspect of embodiments of the disclosure provides an apparatus for recording a report of successful PAC, including:
a receiving module, configured to receive a configuration message sent by a network device, in which the configuration message includes a trigger condition configuration; and
a record module, configured to record the report of successful PAC based on the trigger condition configuration.

Another aspect of embodiments of the disclosure provides an apparatus for recording a report of successful PAC, including:
a sending module, configured to send a configuration message to a terminal, in which the configuration message includes a trigger condition configuration, and the trigger condition configuration indicates the terminal to record the report of successful PAC after the terminal meets the trigger condition configuration.

Another aspect of embodiments of the disclosure provides a communication device, including a processor and a memory. The memory has a computer program stored thereon, and the processor is configured to execute the computer program stored in the memory to cause the communication device to execute the method according to the first aspect of embodiments.

Another aspect of embodiments of the disclosure provides a communication device, includes a processor and a memory. The memory has a computer program stored thereon, and the processor is configured to execute the computer program stored in the memory to cause the communication device to execute the method according to another aspect of embodiments.

Another aspect of embodiments of the disclosure provides a communication device, including: a processor and an interface circuit.

The interface circuit is configured to receive code instructions and transmit the code instructions to the processor.
the processor is configured to run the code instructions to execute the method according to the first aspect of embodiments.

Another aspect of embodiments of the disclosure provides a communication device, including: a processor and an interface circuit.

The interface circuit is configured to receive code instructions and transmit the code instructions to the processor.

The processor is configured to run the code instructions to execute the method according to another aspect of embodiments.

Another aspect of embodiments of the disclosure provides a computer-readable storage medium, configured to store instructions. When the instructions are executed, the method according to the first aspect of embodiments is realized.

Another aspect of embodiments of the disclosure provides a computer-readable storage medium, configured to store instructions. When the instructions are executed, the method according to another aspect of embodiments is realized.

In conclusion, in embodiments of the disclosure, the terminal may first receive the configuration message sent by the network device, and then record the report of successful PAC based on the trigger condition configuration, such that the terminal may record the report of PAC in time. Therefore, in embodiments of the disclosure, by the trigger condition configuration (such as the threshold of the timer associated and the like) in the received configuration message, the terminal may record the report of successful PAC based on the trigger condition configuration. Embodiments of the disclosure provide a processing method for a situation where recording the report of successful PAC is not supported temporarily, to provide the additional confirmation opportunity and to improve the success rate of the PAC.

### BRIEF DESCRIPTION OF THE DRAWINGS

The above and/or additional aspects and advantages of the disclosure will be apparent and easily understood from following description of embodiments in combination with the accompanying drawings, in which:
FIG. 1 is a flow chart illustrating a method for recording a report of successful PScell addition or change according to an embodiment of the disclosure;
FIG. 2 is a flow chart illustrating a method for recording a report of successful PScell addition or change according to another embodiment of the disclosure;
FIG. 3 is a flow chart illustrating a method for recording a report of successful PScell addition or change according to another embodiment of the disclosure;
FIG. 4 is a flow chart illustrating a method for recording a report of successful PScell addition or change according to another embodiment of the disclosure;
FIG. 5 is a flow chart illustrating a method for recording a report of successful PScell addition or change according to another embodiment of the disclosure;
FIG. 6 is a flow chart illustrating a method for recording a report of successful PScell addition or change according to another embodiment of the disclosure;
FIG. 7 is a block diagram illustrating an apparatus for recording a report of successful PScell addition or change according to an embodiment of the disclosure;
FIG. 8 is a block diagram illustrating an apparatus for recording a report of successful PScell addition or change according to another embodiment of the disclosure;
FIG. 9 is a block diagram illustrating a user equipment according to an embodiment of the disclosure; and
FIG. 10 is a block diagram illustrating a network device according to an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations described in the following exemplary embodiments do not represent all implementations consistent with embodiments of the disclosure. Instead, they are merely examples of the apparatuses and methods consistent with some aspects of the embodiments of the disclosure as detailed in the appended claims.

Terms described in the embodiments of the disclosure are only for the purpose of describing specific embodiments, but should not be construed to limit the embodiments of the disclosure. As used in the embodiments of the disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although the terms such as "first", "second", "third", etc. may be used in embodiments of disclosure to describe various information, such information should not be limited by these terms. These terms are only used to distinguish the same type of information from each other. For example, first information may also be referred to as second information, and similarly, the second information may also be referred to as the first information, without departing from the scope of embodiments of the disclosure. As used herein, the term "if' may be construed to mean "when" or "upon" or "in response to determining" depending on the context.

Detailed description is made below to a method, an apparatus and a device for recording a report of successful PScell addition or change, and a storage medium according to embodiments of the disclosure with reference to accompanying drawings.

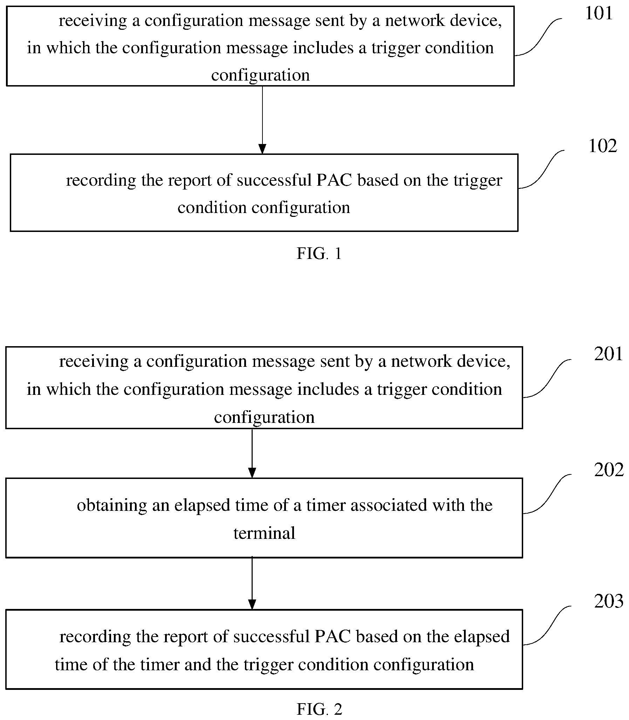

FIG. 1 is a flow chart illustrating a method for recording a report of successful PScell addition or change (PAC) according to an embodiment of the disclosure. The method is performed by a terminal. As illustrated in FIG. 1, the signal transmission method may include the following.

At block 101, a configuration message sent by a network device is received, in which the configuration message includes a trigger condition configuration.

It should be noted that, in an embodiment of the disclosure, the terminal may be a device that provides speech and/or data connectivity to a user. The terminal may communicate with one or more core networks via a radio access network (RAN). The terminal may be an Internet of Things terminal, such as a sensor device, a mobile phone (or referred to as a "cellular" phone) and a computer with an Internet of Things terminal. For example, the terminal may be a fixed, portable, pocket-sized, handheld, built-in computer or vehicle-mounted apparatus, such as, a station (STA), a subscriber unit, a subscriber station, a mobile station, a mobile, a remote station, an access point, a remote terminal, an access terminal, a user terminal, a user agent or the like. Alternatively, the terminal may be a device of an unmanned aerial vehicle. Alternatively, the terminal may be a vehicle-mounted device, such as, a driving computer with a wireless communication function, or a wireless communication device externally connected with a driving computer. Alternatively, the terminal may be a roadside device, such as a street lamp, a signal lamp or other roadside devices with the wireless communication function.

In an embodiment of the disclosure, the configuration message may be a ratio resource control (RRC) reconfiguration message or an RRC connection reconfiguration message.

In an embodiment of the disclosure, the trigger condition configuration may be a successful PAC-Config or a successful PAC-Config EUTRA.

It should be explained that, in an embodiment of the disclosure, due to the multi-radio dual connectivity (MR-DC) technology, the terminal may connect two same or different networks simultaneously, such as a new radio (NR) network and an evolved universal mobile telecommunication system (UMTS) terrestrial radio access (EUTRA) network.

For example, in an embodiment of the disclosure, the trigger condition configuration may be the successful PAC-Config in case a connected network is the NR network, and the trigger condition configuration may be the successful PAC-Config EUTRA in case the connected network is the EUTRA network.

At block 102, the report of successful PAC is recorded based on the trigger condition configuration.

In an embodiment of the disclosure, the method for recording the report of successful PAC may include:
recording the report of successful PAC in a storage variable. Of course, in other embodiments of the disclosure, the report of successful PAC may be recorded in other ways.

In an embodiment of the disclosure, the storage variable may include multiple items, and each item includes a corresponding cause value.

In an embodiment of the disclosure, the trigger condition configuration is deleted before a last PAC is executed. In an embodiment of the disclosure, a configuration of the last PAC may be configured by a source PSCell.

In conclusion, with the method for recording the report of successful PAC according to embodiments of the disclosure, the terminal may first receive the configuration message sent by the network device, and then record the report of successful PAC based on the trigger condition configuration. The disclosure provides a processing method for a situation where "recording the report of successful PAC is not supported temporarily", thus providing an additional confirmation opportunity and improving a success rate of the PAC.

FIG. 2 is a flow chart illustrating a method for recording a report of successful PAC according to an embodiment of the disclosure. The method is performed by the terminal. As illustrated in FIG. 2, the signal transmission method may include the following.

At block 201, a configuration message sent by a network device is received, in which the configuration message includes a trigger condition configuration.

At block 202, an elapsed time of a timer associated with the terminal is obtained.

In an embodiment of the disclosure, the timer associated may include one or more of:
a first timer of a current PSCell, such as, a T304 timer;
a second timer of a current PSCell, such as, a T310 timer; or
a third timer associated with a target PSCell, such as, a T312 timer.

At block 203, the report of successful PAC is recorded based on the elapsed time of the timer and the trigger condition configuration.

In an embodiment of the disclosure, the elapsed time of the timer and the trigger condition configuration may include one or more of:
a first threshold, that is, a ratio of an elapsed time of the first timer to a configuration time of the first timer, in which the first threshold may be configured by a target cell of a PAC, or a primary cell (PCell), or a source PScell, for example, the first threshold is a threshold of the T304 timer;
a second threshold, that is, a ratio of an elapsed time of the second timer to a configuration time of the second timer, in which the second threshold may be configured by a target cell of a PAC, or a PCell, or a source PScell, for example, the second threshold is a threshold of the T3 10 timer; or
a third threshold, that is, a ratio of an elapsed time of the third timer to a configuration time of the third timer, in which the third threshold may be configured by a target cell of a PAC, a PCell, or a source PScell, for example, the third threshold is a threshold of the T312 timer.

In an embodiment of the disclosure, in case any of the above conditions is met, the terminal may record the report of success in a storage variable (a newly defined variable).

In detail, in an embodiment of the disclosure, the terminal may clear a storage variable, such as a VarSuccessPAC-Report, before storing a record for the report of successful PAC, or create a new item-N in the VarSuccessPAC-Report, where N is a positive integer, which is configured to store the record for the report of successful PAC. For the new item-N, the network device may configure a maximum value of the new item-N for storing the record for the report of successful PAC, and the terminal keeps recording until the new item-N reaches the maximum value. In case the new item-N reaches the maximum value, the terminal stops recording any more or continue to store the record for the report of successful PAC after deleting an earliest item.

For example, in an embodiment of the disclosure, the terminal may create the new item-N in the VarSuccessPAC-Report to store the record for the report of successful PAC before storing the record for the report of successful PAC. The network device may configure the maximum value of the new item-N for storing the report of successful PAC to be 50. A new item 1 is created to store a first record for the report of successful PAC, then a new item2 is created to store a second record for the report of successful PAC, ..., and so on. When a new item 51 is created, since the maximum value of the record for the report of successful PAC configured by the network device is reached, the record for the report of successful PAC is stored continuously after the created new item 1 is deleted.

Further, in an embodiment of the disclosure, the storage variable may include multiple items, and each item includes a corresponding cause value.

For example, in an embodiment of the disclosure, in case the report of successful PAC is triggered because the elapsed time of the first timer meets the first threshold, the cause value may be set to T304-cause.

In case the report of successful PAC is triggered because the elapsed time of the second timer meets the second threshold, the cause value is set to T3 10-cause.

In case the report of successful PAC is triggered because the elapsed time of the third timer meets the third threshold, the cause value is set to T312-cause.

Other details about blocks 201 to 203 may refer to description of the above embodiments, which are not elaborated again in the embodiments of the disclosure.

In conclusion, in the method for recording the report of successful PAC according to embodiments of the disclosure, the terminal may first receive the configuration message sent by the network device, in which the configuration message includes the trigger condition configuration, and then record the report of successful PAC based on the trigger condition configuration. In an embodiment of the disclosure, by the trigger condition configuration (the threshold of the timer associated and the like) in the received configuration message, the terminal may record the report of successful PAC based on the trigger condition configuration. The disclosure provides a processing method for the situation where "recording the report of successful PAC is not supported temporarily", to provide an additional confirmation opportunity and to improve the success rate of the PAC.

It should be noted that, in an embodiment of the disclosure, due to the MR-DC technology, the terminal may connect to two same or different networks simultaneously. All the following embodiments take the connected network being the NR network as an example to describe how the terminal records the report of successful PAC.

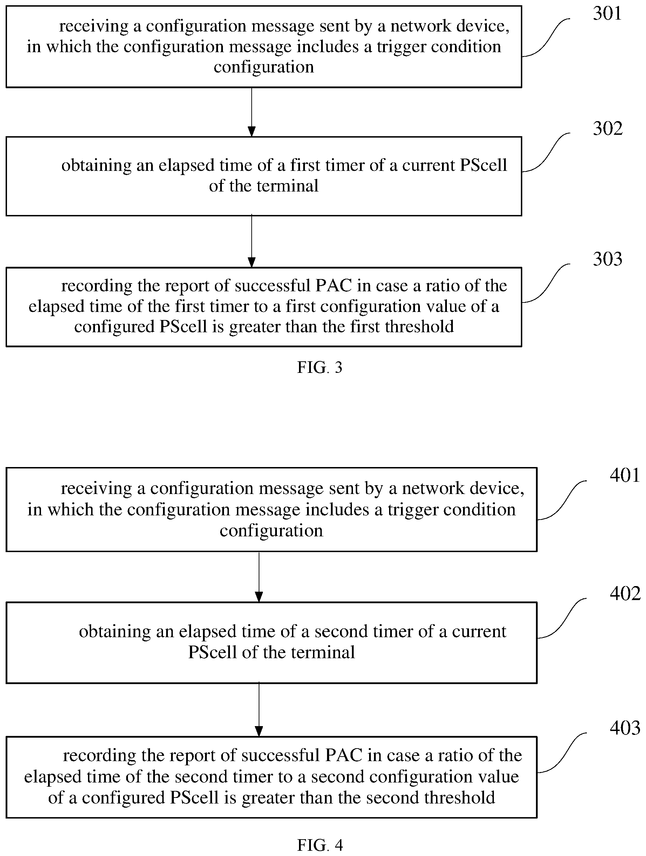

FIG. 3 is a flow chart illustrating a method for recording a report of successful PAC according to an embodiment of the disclosure. The method is performed by the terminal. As illustrated in FIG. 3, the signal transmission method may include the following.

At block 301, a configuration message sent by a network device is received, in which the configuration message includes a trigger condition configuration.

At block 302, an elapsed time of a first timer of a current PScell of the terminal is obtained. For example, the first timer is the T304 timer.

In an embodiment of the disclosure, the first timer is a timer in a random access procedure.

In an embodiment of the disclosure, the first timer may be started when a RRC reconfiguration message (including a reconfiguration WithSync) is received, and stopped after an SCG (secondary cell group) is released when the random access is successfully completed.

At block 303, the report of successful PAC is recorded in case a ratio of the elapsed time of the first timer to a first configuration value of a configured PScell is greater than the first threshold.

In an embodiment of the disclosure, the first configuration value of the configured PScell may be included in the trigger condition configuration. In an embodiment of the disclosure, the first configuration value may be a value of the T304 timer of the configured PScell.

It should be explained that, when the ratio of the elapsed time of the first timer to the first configuration value of the configured PScell is greater than the first threshold, it is considered that the first timer is relatively stable in the current PScell, and then the report of the successful PAC may be successfully recorded. Moreover, since a communication system needs to face access technologies, and absolute times of timers in the different access technologies is inconsistent, a ratio of a relative time of the timer may be set to trigger recording the report of successful PAC.

In addition, when the first timer receives the RRC reconfiguration message, in case the secondary cell group in the RRC reconfiguration message includes a configuration of the reconfiguration WithSync, the ratio of the relative time may be ignored, and the report of successful PAC may be recorded directly based on the reconfiguration WithSync.

In an embodiment of the disclosure, the first configuration value of the configured PScell may be configured when the terminal is still connected to the source PScell before the terminal executes a last PAC. In detail, in an embodiment of the disclosure, the last PAC may be a result of a latest configuration taking effect.

In an embodiment of the disclosure, the trigger condition configuration may be received before the last PAC, and the trigger condition configuration may be the successful PAC-Config.

Other details about blocks 301 to 302 may refer to description of the above embodiments, which are not elaborated again in the embodiments of the disclosure.

In conclusion, in the method for recording the report of successful PAC according to embodiments of the disclosure, the terminal may first receive the configuration message sent by the network device, in which the configuration message includes the trigger condition configuration, and then record the report of successful PAC based on the trigger condition configuration. In an embodiment of the disclosure, by the trigger condition configuration (the threshold and the like of the timer associated) in the received configuration message, the terminal may record the report of successful PAC based on the trigger condition configuration. The disclosure provides a processing method for the situation where "recording the report of successful PAC is not supported temporarily", to provide an additional confirmation opportunity and to improve the success rate of the PAC.

FIG. 4 is a flow chart illustrating a method for recording a report of successful PAC according to an embodiment of the disclosure. The method is performed by the terminal. As illustrated in FIG. 4, the signal transmission method may include the following.

At block 401, a configuration message sent by a network device is received, in which the configuration message includes a trigger condition configuration.

At block 402, an elapsed time of a second timer of a current PScell of the terminal is obtained. For example, the second timer is the T310 timer.

In an embodiment of the disclosure, the second timer is a timer for cell synchronous access.

In an embodiment of the disclosure, the second timer may be started when a physical layer problem of a PCell is detected, that is, when the second timer receives N310 continuous synchronization instructions outputted from a low layer. The second timer is stopped after the SCG is released when the second timer receives N311 continuous synchronization instructions from the low layer of the SPCell, receives the RRC reconfiguration message with the reconfigurationWithSync of the SPCell, or receives a MobilityFromNRCommand, or when conditional reconfiguration is performed, for example, a stored RRCReconfiqionMessage is applied, including performing synchronous reconfiguration in the SPCell, or when a fault information program of a master cell group (MCG) is started.

At block 403, a report of successful PAC is recorded in case a ratio of the elapsed time of the second timer to a second configuration value of the configured PScell is greater than a second threshold.

In an embodiment of the disclosure, the second configuration value of the configured PScell may be included in the trigger condition configuration. In an embodiment of the disclosure, the second configuration value may be a value of the T310 timer of the configured PScell.

In an embodiment of the disclosure, the second configuration value of the configured PScell may be configured when the terminal is still connected to a source PScell before the terminal executes a last PAC, that is, the terminal may perform recording based on a historical configuration.

In an embodiment of the disclosure, the trigger condition configuration may be received before the last PAC.

Other details about blocks 401- 403 may refer to the description of the above embodiments, which are not elaborated again in the embodiments of the disclosure.

In conclusion, in the method for recording the report of successful PAC according to embodiments of the disclosure, the terminal may first receive the configuration message sent by the network device, in which the configuration message includes the trigger condition configuration, and then record the report of successful PAC based on the trigger condition configuration. In an embodiment of the disclosure, by the trigger condition configuration (the threshold of the timer associated and the like) in the received configuration message, the terminal may record the report of successful PAC based on the trigger condition configuration. The disclosure provides a processing method for the situation where "recording the report of successful PAC is not supported temporarily", to provide an additional confirmation opportunity and to improve the success rate of the PAC.

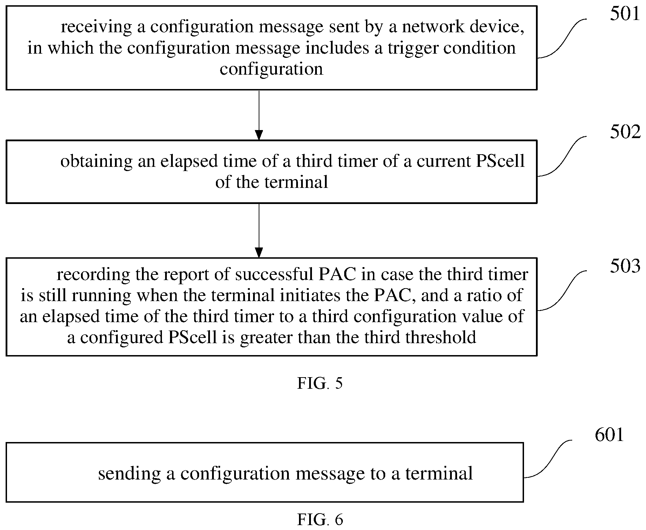

FIG. 5 is a flow chart illustrating a method for recording a report of successful PAC according to an embodiment of the disclosure. The method is performed by the terminal. As illustrated in FIG. 5, the signal transmission method may include the following.

At block 501, a configuration message sent by a network device is received, in which the configuration message may include trigger condition configuration.

At block 502, an elapsed time of a third timer of a current PScell of the terminal is obtained. For example, the third timer is the T312 timer.

In an embodiment of the disclosure, the third timer starts a timer for cell measurement.

In an embodiment of the disclosure, the third timer is configured in a master cell group (MSG). In case a second timer in a PCell is in a running state, a measurement report is triggered for a measurement identify with the third timer configured and set to True. The third timer is configured in an SCG. In case the second timer in the PSCell is in the running state, a measurement report is triggered for the measurement identify with the third timer configured and set to True.

In an embodiment of the disclosure, a special cell (Spcell) may receive the RRC reconfiguration with the reconfigurationWithSync after the third timer receives N311 continuous synchronization instructions from a low layer. The third timer may receive a MobilityFromNRCommand when a connection reestablishment program is started. When a stored RRC reconfiguration message is applied, including performing synchronous reconfiguration on the Spcell, and when the second timer expires in the corresponding Spcell, and if the third timer remains in the SCG, the SCG is released and the third timer is stopped.

At block 503, the report of the successful PAC is recorded in case the third timer is still running when the terminal initiates the PAC, and a ratio of an elapsed time of the third timer to a third configuration value of the configured PScell is greater than a third threshold.

In an embodiment of the disclosure, the third configuration value of the configured PScell may be included in the trigger condition configuration. In an embodiment of the disclosure, the third configuration value may be a value of the timer T312 of the configured PScell.

In an embodiment of the disclosure, the third configuration value of the configured PScell may be configured when the terminal is still connected to the source PScell before the terminal executes the last PAC.

In an embodiment of the disclosure, the trigger condition configuration may be received before the last PAC.

Other details about blocks 501- 503 may refer to description of the above embodiments, which are not elaborated again in the embodiments of the disclosure.

In conclusion, in the method for recording the report of successful PAC according to embodiments of the disclosure, the terminal may first receive the configuration message sent by the network device, in which the configuration message includes the trigger condition configuration, and then record the report of successful PAC based on the trigger condition configuration. In the embodiments of the disclosure, by the trigger condition configuration (the threshold of the associated timer and the like) in the received configuration message, the terminal may record the report of successful PAC based on the trigger condition configuration according to different timers and different access technologies. With the embodiments of the disclosure, a processing method for the situation where "the record of the report of successful PAC is not supported temporarily is provided, to provide an additional confirmation opportunity and to improve the success rate of the PAC.

FIG. 6 is a flow chart illustrating a method for recording a report of successful PAC according to an embodiment of the disclosure. The method is performed by the network device. As illustrated in FIG. 6, the signal transmission method includes the following.

At block 601, a configuration message is sent to a terminal, in which the configuration message includes a trigger condition configuration, and the trigger condition configuration indicates the terminal to record the report of successful PAC after the terminal meets the trigger condition configuration.

In an embodiment of the disclosure, the trigger condition configuration includes a first threshold corresponding to a first timer of a current PScell or a second threshold corresponding to a second timer of a current PScell.

In an embodiment of the disclosure, the trigger condition configuration further includes a first configuration value of a configured PScell or a second configuration value of a configured PScell.

In an embodiment of the disclosure, the trigger condition configuration includes a third threshold corresponding to a third timer associated with a measurement identity of a target PScell.

In an embodiment of the disclosure, the configuration message is a radio resource control (RRC) reconfiguration message or an RRC connection reconfiguration message.

Other details about block 601 may refer to the description of the above embodiments, which are not elaborated again in the embodiments of the disclosure.

In conclusion, in the method for recording the report of successful PAC according to embodiments of the disclosure, the terminal may first receive the configuration message sent by the network device, in which the configuration message includes the trigger condition configuration, and then record the report of successful PAC based on the trigger condition configuration. In an embodiment of the disclosure, by the trigger condition configuration in the received configuration message, the terminal may record the report of successful PAC based on the trigger condition configuration. The disclosure provides a processing method for the situation where "recording the report of successful PAC is not supported temporarily", to provide an additional confirmation opportunity and to ensure the success rate of the PAC.

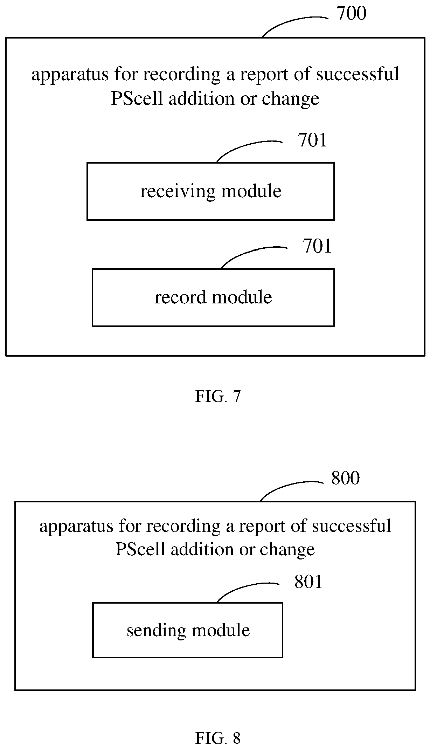

FIG. 7 is a block diagram illustrating an apparatus for recording a report of successful PAC according to an embodiment of the disclosure. As illustrated in FIG. 7, the apparatus may include:
a receiving module, configured to receive a configuration message sent by a network device, in which the configuration message includes a trigger condition configuration; and
a record module, configured to record the report of successful PAC based on the trigger condition configuration.

In conclusion, in the apparatus for recording the report of successful PAC according to embodiments of the disclosure, the terminal may first receive the configuration message sent by the network device, in which the configuration message includes the trigger condition configuration, and then record the report of successful PAC based on the trigger condition configuration. In an embodiment of the disclosure, by the trigger condition configuration (the threshold of the timer associated and the like) in the received configuration message, the terminal may record the report of successful PAC based on the trigger condition configuration. The disclosure provides a processing method for the situation where "recording the report of successful PAC is not supported temporarily", to provide an additional confirmation opportunity and to ensure the success rate of the PAC.

Alternatively, in an embodiment of the disclosure, the record module is further configured to:
obtain an elapsed time of a timer associated with the terminal; and
record the report of successful PAC based on the elapsed time of the timer and the trigger condition configuration.

Alternatively, in an embodiment of the disclosure, the record module is further configured to:
record the report of successful PAC in case a ratio of an elapsed time of the first timer to a first configuration value of a configured PScell is greater than the first threshold. In an embodiment of the aspect, the first timer may be a T304 timer, the first threshold is a threshold of the T304 timer, and the first configuration value is a value of the T304 timer of the configured PScell.

Alternatively, in an embodiment of the disclosure, the first configuration value of the configured PScell is included in the trigger condition configuration.

Alternatively, in an embodiment of the disclosure, the configuration message including the first configuration value of the configured PScell is a radio resource control (RRC) reconfiguration message last applied, and a secondary cell group in the RRC reconfiguration message includes a reconfigurationWithSync.

Alternatively, in an embodiment of the disclosure, the trigger condition configuration is received before a last PAC.

Alternatively, in an embodiment of the disclosure, the record module is further configured to:
record the report of successful PAC in case a ratio of an elapsed time of the second timer to a second configuration value of a configured PScell is greater than the second threshold. In an embodiment of the aspect, the second timer may be a T310 timer, the first threshold is a threshold of the T310 timer, and the first configuration value is a value of the T310 timer of the configured PScell.

Alternatively, in an embodiment of the disclosure, the second configuration value of the configured PScell is included in the trigger condition configuration.

Alternatively, in an embodiment of the disclosure, the second configuration value of the configured PScell is configured when the terminal is still connected to a source PScell before the terminal executes a last PAC.

Alternatively, in an embodiment of the disclosure, the trigger condition configuration is received before a last PAC.

Alternatively, in an embodiment of the disclosure, the record module is further configured to:
record the report of successful PAC in case the third timer is still running when the terminal initiates the PAC, and a ratio of an elapsed time of the third timer to a third configuration value of a configured PScell is greater than the third threshold. In an embodiment of the aspect, the third timer may be a T312 timer, the third threshold is a threshold of the T312 timer, and the third configuration value is a value of the T312 timer of the configured PScell.

Alternatively, in an embodiment of the disclosure, the third configuration value of the configured PScell is included in the trigger condition configuration.

Alternatively, in an embodiment of the disclosure, the third configuration value of the configured PScell is configured when the terminal is still connected to a source PScell before the terminal executes a last PAC.

Alternatively, in an embodiment of the disclosure, the trigger condition configuration is received before a last PAC.

Alternatively, in an embodiment of the disclosure, the configuration message is a radio resource control (RRC) reconfiguration message or an RRC connection reconfiguration message.

Alternatively, in an embodiment of the disclosure, the record module is further configured to:
record the report of successful PAC in a storage variable.

Alternatively, in an embodiment of the disclosure, the storage variable includes multiple items, and each item includes a corresponding cause value.

Alternatively, in an embodiment of the disclosure, the record module is further configured to:
delete the trigger condition configuration before a last PAC is executed.

FIG. 8 is a block diagram illustrating an apparatus for recording a report of successful PAC according to an embodiment of the disclosure. As illustrated in FIG. 8, the apparatus may include:
a sending module, configured to send a configuration message to a terminal, in which the configuration message includes a trigger condition configuration, and the trigger condition configuration indicates the terminal to record the report of successful PAC after the terminal meets the trigger condition configuration.

In conclusion, in the apparatus for recording the report of successful PAC according to embodiments of the disclosure, the terminal may first receive the configuration message sent by the network device, in which the configuration message includes the trigger condition configuration, and then record the report of successful PAC based on the trigger condition configuration. In an embodiment of the disclosure, by the trigger condition configuration (the threshold of the timer associated and the like) in the received configuration message, the terminal may record the report of successful PAC based on the trigger condition configuration. The disclosure provides a processing method for the situation where "recording the report of successful PAC is not supported temporarily", to provide an additional confirmation opportunity and to ensure the success rate of the PAC.

Alternatively, in an embodiment of the disclosure, the trigger condition configuration includes a first threshold corresponding to a first timer of a current PScell or a second threshold corresponding to a second timer of a current PScell.

Alternatively, in an embodiment of the disclosure, the trigger condition configuration further includes a first configuration value of a configured PScell or a second configuration value of a configured PScell.

Alternatively, in an embodiment of the disclosure, the trigger condition configuration includes a third threshold corresponding to a third timer associated with a measurement identity of a target PScell.

Alternatively, in an embodiment of the disclosure, the trigger condition configuration further includes a third configuration value of a configured PScell.

Alternatively, in an embodiment of the disclosure, the configuration message is a radio resource control (RRC) reconfiguration message or an RRC connection reconfiguration message.

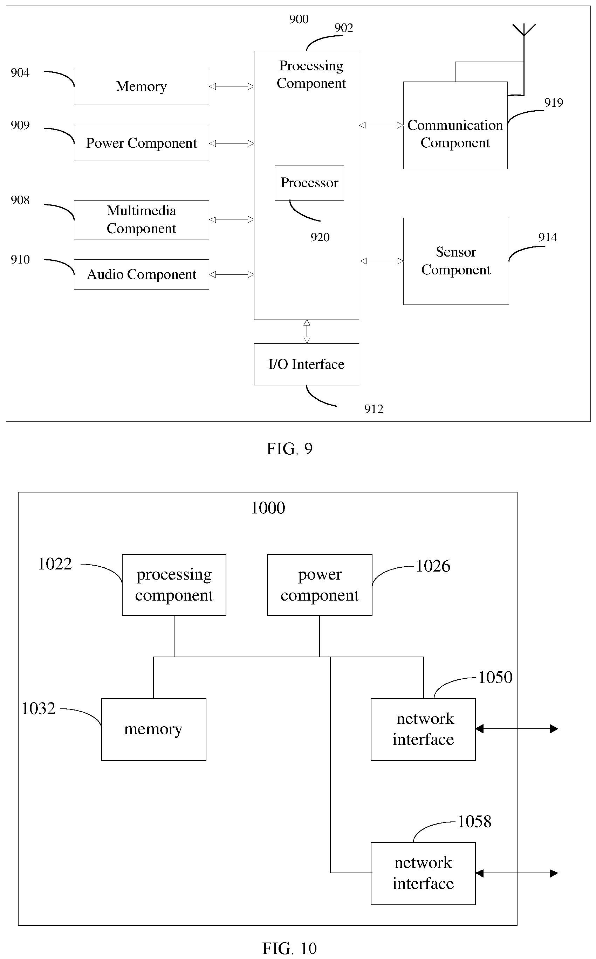

FIG. 9 is a block diagram illustrating a user equipment (UE) 900 according to an embodiment of the disclosure. For example, the UE 900 may be a mobile phone, a computer, a digital broadcasting terminal, a message sending and receiving device, a game controller, a tablet, a medical device, a fitness equipment, a personal digital assistant or the like.

Referring to FIG. 9, the UE 900 may include one or more of the following components: a processing component 902, a memory 904, a power component 906, a multimedia component 908, an audio component 910, an input/output (I/O) interface 912, a sensor component 913, and a communication component 916.

The processing component 902 typically controls overall operations of the UE 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For example, the processing component 902 may include a multimedia module to facilitate the interaction between the multimedia component 908 and the processing component 902.

The memory 904 is configured to store various types of data to support the operation of the UE 900. Examples of such data include instructions for any applications or methods operated on the UE 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the UE 900. The power component 906 may include a power management system, one or more power sources, and any other components associated with the generation, management, and distribution of power in the UE 900.

The multimedia component 908 includes a screen providing an output interface between the UE 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a waken-up period and a pressure associated with the touch or swipe action. In some embodiments, the multimedia component 908 includes a front camera and/or a rear camera. The front camera and the rear camera may receive an external multimedia datum while the UE 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) configured to receive an external audio signal when the UE 900 is in an operation mode, such as a call mode, a recording mode, and a speech recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but be not limited to, a home button, a volume button, a starting button, and a locking button.

The sensor component 913 includes one or more sensors to provide status assessments of various aspects of the UE 900. For example, the sensor component 913 may detect an open/closed status of the UE 900, relative positioning of components, e.g., the display and the keypad, of the UE 900, a change in position of the UE 900 or a component of the UE 900, a presence or absence of user contact with the UE 900, an orientation or an acceleration/deceleration of the UE 900, and a change in temperature of the UE 900. The sensor component 913 may include a proximity sensor configured to detect the presence of nearby objects without any physical contact. The sensor component 913 may also include a light sensor, such as a CMOS or CCD image sensor, for use in imaging applications. In some embodiments, the sensor component 913 may also include an accelerometer sensor, a gyroscope sensor, a magnetic sensor, a pressure sensor, or a temperature sensor.

The communication component 916 is configured to facilitate communication, wired or wirelessly, between the UE 900 and other devices. The UE 900 may access a wireless network based on a communication standard, such as Wi-Fi, 2G, or 3G, or a combination thereof. In an exemplary embodiment, the communication component 916 receives a broadcast signal or broadcast related information from an external broadcast management system via a broadcast channel. In an exemplary embodiment, the communication component 916 also includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In one or more exemplary embodiments, the UE 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

FIG. 10 is a block diagram illustrating a network device 1000 according to an embodiment of the disclosure. For example, the network device 1000 may be provided as a device in a network side. Referring to FIG. 10, the network device 1000 includes a processing component 1011 and a memory resource represented by a memory 1032. The processing component 1011 may further include one or more processors. The memory resource is configured to store instructions executable by the processing component 1022, such as an application. The application stored in the memory 1032 may include one or more modules each corresponding to a set of instructions. In addition, the processing component 1010 is configured to execute the instructions to execute any of the above methods in the network device, such as, the method illustrated in FIG. 1.

The network device 1000 also includes a power component 1026 configured to operate a power management of the network device 1000, a wired or wireless network interface 1050 configured to connect the network device 1000 to the network, and an input/output (I/O) interface 1058. The network device 400 may operate an operating system stored in the memory 1032, such as Windows Server TM, Mac OS XTM, Unix TM, Linux TM, Free BSDTM, or the like.

In the above embodiments according to the disclosure, the methods according to embodiments of the disclosure are introduced respectively from the perspectives of the network device and the UE. In order to realize each function in the method according to embodiments of the disclosure, the network device and the UE may include a hardware structure and a software module, and realize the above functions in the form of the hardware structure, the software module, or a combination of the hardware structure and the software module. One of the above functions may be executed in a way of the hardware structure, the software module, or a combination of the hardware structure and the software module.

In the above embodiments according to the disclosure, the methods according to embodiments of the disclosure are introduced respectively from the perspectives of the network device and the UE. In order to realize each function in the method according to embodiments of the disclosure, the network device and the UE may include the hardware structure and the software module, and realize the above functions in the form of the hardware structure, the software module, or the combination of the hardware structure and the software module. One of the above functions may be executed in the way of the hardware structure, the software module, or the combination of the hardware structure and the software module.

Embodiments of the disclosure provide a communication device. The communication device may include a receiving and sending module and a processing module. The receiving and sending module may include a sending module and/or a receiving module. The sending module is configured to realize a sending function, and the receiving module is configured to realize a receiving function. The receiving and sending module may realize the sending function and/or the receiving function.

The communication device may be a terminal (such as the terminal in the method embodiments), a device in the terminal, or a device that can be used in matching with the terminal. Alternatively, the communication device may be the network device, a device in the network device, or a device that can be used in matching with the network device.

Embodiments of the disclosure provide another communication device. The communication device may be the network device, the terminal (such as the terminal in the above method embodiments), or a chip, a chip system, a processor or the like that supports the network device to realize the above method, or a chip, a chip system, a processor or the like that supports the terminal to realize the above method. The communication device may be configured to realize the methods described in the above method embodiments. For details, please refer to the description in the above method embodiments.

The communication device may include one or more processors. The processor may be a general-purpose processor or a dedicated processor or the like, such as a baseband processor or a central processing processor. The baseband processor may be configured to process a communication protocol and communication data. The central processing processor may be configured to control the communication device (such as, a device in the network side, a baseband chip, a terminal, a terminal chip, a DU, or a CU), to execute a computer program, and to process data of the computer program.

Alternatively, the communication device may further include one or more memories having a computer program stored thereon. The processor is configured to execute the computer program, to enable the communication device to execute the method described in the above method embodiments. Alternatively, the memory may also store data. The communication device and the memory may be disposed separately or integrated together.

Alternatively, the communication device may further include a transceiver and an antenna. The transceiver may be referred to as a transceiver unit, a transceiver, a transceiver circuit or the like for realizing a receiving and sending function. The transceiver may include a receiver and a sender. The receiver may be referred to as a receiver or a receiving circuit, for realizing a receiving function. The sender may be referred to as a sender or a sending circuit for realizing a sending function.

Alternatively, the communication device may further include one or more interface circuits. The interface circuit is configured to receive code instructions and transmit the code instructions to the processor. The processor runs the code instructions to enable the communication device to execute the method described in the above method embodiments.

The communication device is the terminal (such as the terminal in the above method embodiments). The processor is configured to execute the method illustrated in any one of FIGs. 1-5.

In an implementation, the processor may include a transceiver for realizing the receiving and sending functions. For example, the transceiver may be a transceiver circuit, an interface, or an interface circuit. The transceiver circuit, the interface, or the interface circuit for realizing the receiving and sending functions may be separate or integrated together. The transceiver circuit, the interface, or the interface circuit may be configured to read and write codes/data, or the transceiver circuit, the interface, or the interface circuit may be configured to signal transmission or delivery.

In an implementation, the processor may store a computer program. The computer program running on the processor may cause the communication device to execute the method described in the above method embodiments. The computer program may be solidified in the processor. In this case, the processor may be implemented by hardware.

In an implementation, the communication device may include a circuit. The circuit may realize a function of sending, receiving or communicating in the above method embodiments. The processor and the transceiver described in the disclosure may be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device described in the above embodiments may be the network device or the terminal (such as the terminal in the above method embodiments), but a scope of the communication device described in the disclosure is not limited thereto, and a structure of the communication device may not be limited. The communication device may be a standalone device or may be part of a larger device. For example, the communication device may be:
(1) a stand-alone IC, a chip, a chip system or a subsystem;
(2) a collection of ICs including one or more ICs, alternatively, the collection of ICs also including storage components for storing data and computer programs;
(3) an ASIC, such as a modem;
(4) modules that may be embedded in other devices;
(5) a receiver, a terminal, a smart terminal, a cellular phone, a wireless device, a handheld machine, a mobile unit, an in-vehicle device, a network device, a cloud device, an artificial intelligence device, and the like; or
(6) others.

The case where the communication device may be the chip or the chip system. The chip includes a processor and an interface. There may be one or more processors, and there may be more than one interface 1102.

Alternatively, the chip further includes a memory. The memory is configured to store necessary computer programs and data.

It may be understood by those skilled in the art that various illustrative logical blocks and steps listed in embodiments of the disclosure may be implemented by electronic hardware, computer software, or a combination of both. Whether such function is implemented by hardware or software depends on a particular application and a design requirement of the entire system. Those skilled in the art may, for each particular application, use various methods to execute the described function, but such implementation should not be understood as beyond the scope of protection of embodiments of the disclosure.

The disclosure further provides a readable storage medium having instructions stored thereon. When the instructions are executed by a computer, the functions according to any of the above method embodiments are realized.

The disclosure further provides a computer program product. When the computer program product is executed by a computer, the functions according to any of the above method embodiments are realized.

The above embodiments may be implemented in whole or in part by software, hardware, firmware, or any combination thereof. When implemented using software, the above embodiments may be implemented, in whole or in part, in the form of the computer program product. The computer program product includes one or more computer programs. When loading and executing the computer program in the computer, all or part of processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired way (e.g., using coaxial cables, fiber optics, or digital subscriber lines (DSLs) or wireless way (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art may understand that various numerical numbers such as the first, second, and the like involved in the disclosure are only described for the convenience of differentiation, and are not used to limit the scope of embodiments of the disclosure, or used to indicate the order of precedence.

The term "at least one" in the disclosure may also be described as one or more, and the term "more than one" may be two, three, four, or more, which is not limited in the disclosure. In embodiments of the disclosure, for a type of technical features, the term "first", "second", and "third", "A", "B", "C" and "D" and the like are used to distinguish different technical features of the type, the technical features described using the "first", "second", and "third", and "A", "B", "C" and "D" do not indicate any order of precedence or magnitude.

Other embodiments of the disclosure will be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It should be understood that the disclosure is not limited to the exaction construction that has been described above and illustrated in the accompanying drawings, and that various modifications and changes may be made without departing from the scope thereof. The scope of the disclosure only be limited by the appended claims.

## Claims

1. A method for recording a report of successful primary secondary cell (PScell) addition or change (PAC), performed by a terminal, comprising:
receiving a configuration message sent by a network device, wherein the configuration message comprises a trigger condition configuration; and
recording the report of successful PAC based on the trigger condition configuration.

2. The method of claim 1, wherein recording the report of successful PAC based on the trigger condition configuration comprises:
obtaining an elapsed time of a timer associated with the terminal; and
recording the report of successful PAC based on the elapsed time of the timer and the trigger condition configuration.

3. The method of claim 2, wherein the timer associated is a first timer of a current PScell, the trigger condition configuration comprises a first threshold, and recording the report of successful PAC based on an elapsed time of the first timer and the trigger condition configuration comprises:
recording the report of successful PAC in case a ratio of the elapsed time of the first timer to a first configuration value of a configured PScell is greater than the first threshold.

4. The method of claim 3, wherein the first configuration value of the configured PScell is comprised in the trigger condition configuration.

5. The method of claim 4, wherein the configuration message comprising the first configuration value of the configured PScell is a radio resource control (RRC) reconfiguration message last applied, and a secondary cell group in the RRC reconfiguration message comprises a reconfigurationWithSync.

6. The method of claim 4, wherein the trigger condition configuration is received before a last PAC.

7. The method of claim 2, wherein the timer associated is a second timer of a current PScell, the trigger condition configuration comprises a second threshold, and recording the report of successful PAC based on the elapsed time of the timer and the trigger condition configuration comprises:
recording the report of successful PAC in case a ratio of an elapsed time of the second timer to a second configuration value of a configured PScell is greater than the second threshold.

8. The method of claim 7, wherein the second configuration value of the configured PScell is comprised in the trigger condition configuration.

9. The method of claim 7, wherein the second configuration value of the configured PScell is configured when the terminal is still connected to a source PScell before the terminal executes a last PAC.

10. The method of claim 7, wherein the trigger condition configuration is received before a last PAC.

11. The method of claim 2, wherein the timer associated is a third timer associated with a measurement identity of a target PScell, the trigger condition configuration comprises a third threshold, and recording the report of successful PAC based on the elapsed time of the timer and the trigger condition configuration comprises:
recording the report of successful PAC in case the third timer is still running when the terminal initiates the PAC, and a ratio of an elapsed time of the third timer to a third configuration value of a configured PScell is greater than the third threshold.

12. The method of claim 11, wherein the third configuration value of the configured PScell is comprised in the trigger condition configuration.

13. The method of claim 11, wherein the third configuration value of the configured PScell is configured when the terminal is still connected to a source PScell before the terminal executes a last PAC.

14. The method of claim 12, wherein the trigger condition configuration is received before a last PAC.

15. The method of any of claims 1 to 14, wherein the configuration message is a radio resource control (RRC) reconfiguration message or an RRC connection reconfiguration message.

16. The method of any of claims 1 to 15, wherein recording the report of successful PAC comprises:
recording the report of successful PAC in a storage variable.

17. The method of claim 16, wherein the storage variable comprises a plurality of items, and each item comprises a corresponding cause value.

18. The method of any of claims 1 to 15, further comprising:
deleting the trigger condition configuration before executing a last PAC.

19. A method for recording a report of success primary secondary cell (PScell) addition or change (PAC), performed by a network device, comprising:
sending a configuration message to a terminal, wherein the configuration message comprises a trigger condition configuration, and the trigger condition configuration indicates the terminal to record the report of successful PAC after the terminal meets the trigger condition configuration.

20. The method of claim 19, wherein the trigger condition configuration comprises a first threshold corresponding to a first timer of a current PScell or a second threshold corresponding to a second timer of a current PScell.

21. The method of claim 20, wherein the trigger condition configuration further comprises a first configuration value of a configured PScell or a second configuration value of a configured PScell.

22. The method of claim 19, wherein the trigger condition configuration comprises a third threshold corresponding to a third timer associated with a measurement identity of a target PScell.

23. The method of claim 22, wherein the trigger condition configuration further comprises a third configuration value of a configured PScell.

24. The method of claim 19, wherein the configuration message is a radio resource control (RRC) reconfiguration message or an RRC connection reconfiguration message.

25. An apparatus for recording a report of success primary secondary cell (PScell) addition or change (PAC), comprising:
a receiving module, configured to receive a configuration message sent by a network device, wherein the configuration message comprises a trigger condition configuration; and
a record module, configured to record the report of successful PAC based on the trigger condition configuration.

26. An apparatus for recording a report of success primary secondary cell (PScell) addition or change (PAC), comprising:
a sending module, configured to send a configuration message to a terminal, wherein the configuration message comprises a trigger condition configuration, and the trigger condition configuration indicates the terminal to record the report of successful PAC after the terminal meets the trigger condition configuration.

27. A communication device, comprising a processor and a memory, wherein the memory has a computer program stored thereon, and the processor is configured to execute the computer program stored in the memory to cause the communication device to execute the method according to any one of claims 1 to 18.

28. A communication device, comprising a processor and a memory, wherein the memory has a computer program stored thereon, and the processor is configured to execute the computer program stored in the memory to cause the communication device to execute the method according to any one of claims 19 to 24.

29. A communication device, comprising: a processor and an interface circuit; wherein,
the interface circuit is configured to receive code instructions and transmit the code instructions to the processor; and
the processor is configured to run the code instructions to execute the method according to any one of claims 1 to 18.

30. A communication device, comprising: a processor and an interface circuit; wherein,
the interface circuit is configured to receive code instructions and transmit the code instructions to the processor; and
the processor is configured to run the code instructions to execute the method according to any one of claims 19 to 24

31. A computer-readable storage medium, configured to store instructions, wherein, when the instructions are executed, the method according to any one of claims 1 to 18 is realized.

32. A computer-readable storage medium, configured to store instructions, wherein, when the instructions are executed, the method according to any one of claims 19 to 24 is realized.
